# FASCICULE DE BREVET EUROPEEN

(11) **EP 3 763 674 B1**
(45) Date de publication et mention de la délivrance du brevet: **16.02.2022**
(21) Numéro de dépôt: 20184654.0
(22) Date de dépôt: 08.07.2020
(51) Int. Cl.: C01B 33/38, C01B 33/42, B01D 11/02, G01N 33/44

(54) **PROCÉDÉ D'EXTRACTION D'UN MINÉRAL CONTENU DANS DES BIOTITES**
VERFAHREN ZUR EXTRAKTION EINES BIOTITEN ENTHALTENEN MINERALS
PROCESS FOR EXTRACTING A MINERAL CONTAINED IN BIOTITES

(30) Priorité: 08.07.2019 FR 1907628
(43) Date de publication de la demande: 13.01.2021
(73) Titulaire: BRGM, 45060 Orléans Cedex 2 (FR); TOTAL SE, 92400 Courbevoie (FR)
(72) Inventeur: WYNS, Robert, 45190 BEAUGENCY (FR); BAPTISTE, Julien, 45240 LA FERTE-SAINT-AUBIN (FR); DURON, Jéromine, 45240 LA FERTE-SAINT-AUBIN (FR); ROIG, Jean-Yves, 45160 OLIVET (FR); MONTECH, Sébastien, 41220 LA FERTE-SAINT-CYR (FR)
(74) Mandataire: LLR

(56) Documents cités:
- CN-A- 102 153 095
- W. R. FISCHER: "Einfluß von Frieren und Tauen auf Glimmer und Orthoklas", ZEITSCHRIFT FUER PFLANZENERNAEHRUNG UND BODENKUNDE. JOURNAL OFPLANT NUTRITION AND SOIL SCIENCE., vol. 133, no. 1-2, 1 janvier 1972 (1972-01-01), pages 37-40, XP055705592, DE ISSN: 0044-3263, DOI: 10.1002/jpln.19721330106
- GIANFRANCO DI VINCENZO ET AL: "The effect of chlorite interlayering on 40Ar-39Ar biotite dating: an 40Ar-39Ar laser-probe and TEM investigations of variably chloritised biotites", CONTRIBUTIONS TO MINERALOGY AND PETROLOGY, vol. 145, no. 6, 1 septembre 2003 (2003-09-01), pages 643-658, XP055705654, Berlin/Heidelberg ISSN: 0010-7999, DOI: 10.1007/s00410-003-0472-z
- J.C. PARNEIX ET AL: "Biotite chloritization process in hydrothermally altered granites", CHEMICAL GEOLOGY., vol. 51, no. 1-2, 1 octobre 1985 (1985-10-01), pages 89-101, XP055705646, NL ISSN: 0009-2541, DOI: 10.1016/0009-2541(85)90089-0

## Description

L'invention concerne l'extraction de minéraux contenus dans des biotites, notamment des feldspaths potassiques. Elle concerne également la caractérisation d'une paléoaltération, et plus particulièrement d'une roche felsique contenant des biotites, notamment un granitoïde.

L'altération des roches métamorphiques ou plutoniques, qu'elle soit hydrothermale ou supergène, se traduit notamment par la transformation précoce des biotites en chlorite ou en vermiculite, en fonction de la température des fluides présents. De plus, l'altération des biotites en chlorite s'accompagne très souvent de la cristallisation de feldspath potassique, selon la réaction suivante :

*biotite* + *quartz* + *H2O* -> *chlorite* + *goethite* + *feldspath potassique*

Ces feldspaths potassiques pourraient correspondre à des adulaires, minéraux qui sont des feldspaths potassiques cristallisant à basse température (environ 100°C). Les adulaires néoformées sont communément observées dans des roches altérées felsiques telles que des granités. Ces grains d'adulaire sont de petite taille (30 µm à 300 µm environ) et précipitent fréquemment dans les clivages des biotites en voie de chloritisation.

Les biotites chloritisées peuvent également contenir dans leurs clivages, des cristaux de quartz, de plagioclase et de prehnite.

L'étude des feldspaths potassiques issus de l'altération de la biotite permet de caractériser, et notamment de dater, l'altération des roches grenues felsiques altérées riches en biotite. Dans la revue Zeitschrift Für Pflanzenernährung und Bodenkunde, vol. 133, n°1-2, 1 janvier 1972, pages 37-40, W.R. FISCHER rapporte les conséquences de cycles répétés de congélation/décongélation appliqués à des minéraux comme les micas, en particulier les biotites.

L'invention a pour but de fournir un procédé de séparation de minéraux présents au sein des biotites altérées (biotites chloritisées notamment) présentes dans des roches en cours d'altération, en vue de la caractérisation de ces minéraux et de la datation des feldspaths potassiques.

A cet effet, l'invention a pour objet un procédé d'extraction d'un minéral contenu dans des biotites selon la revendication 1.

Grâce à un procédé qu'ils ont mis au point, les inventeurs proposent d'isoler ces minéraux, ce qui permet par la suite de les caractériser et de caractériser également la paléoaltération des roches dont ils sont issus, en étudiant les feldspaths potassiques. Ce procédé d'extraction est particulièrement intéressant car il permet d'extraire des minéraux qui se présentent sous la forme de cristaux de très petite taille (30 µm à 300 µm) et sont de ce fait manipulables aisément.

Plus particulièrement, le minéral est contenu dans les clivages des biotites.

De façon avantageuse, la décongélation des biotites est une lyophilisation. On entend par lyophilisation, la dessication des biotites préalablement congelées, par sublimation de l'eau. De façon surprenante, les inventeurs ont montré que la lyophilisation permet d'ouvrir les feuillets des biotites.

De façon préférentielle, le minéral est choisi parmi les minéraux suivants : feldspath potassique, quartz, plagioclase, et prehnite.

Il est particulièrement avantageux d'extraire des feldspaths potassiques car ils contiennent du potassium, qui est un élément datable par la méthode de datation Ar/Ar.

Les biotites sont mises en contact avec de l'eau, et de façon préférentielle de l'eau déminéralisée, préalablement aux étapes de congélation et décongélation. Elles sont maintenues en contact avec l'eau pendant l'étape de congélation et au moins une partie de l'étape de décongélation. Les biotites peuvent être maintenues en contact avec l'eau pendant toute l'étape de décongélation. De façon préférentielle, l'eau utilisée dans ces étapes du procédé est dépourvue de potassium.

L'étape de décongélation a lieu dans un lyophilisateur. De façon optionnelle, au moins une partie de l'étape de congélation a lieu dans un lyophilisateur.

De façon avantageuse, l'étape de congélation est effectuée à une température allant jusqu'à -40°C.

La décongélation des biotites a lieu à environ 1 mbar, ainsi qu'une partie de l'étape de congélation.

Au moins une partie de l'étape de congélation est effectuée sous une pression d'environ 1 mbar.

Avantageusement, l'étape de décongélation dure de 36 à 76 heures, de préférence de 41 à 66 heures, encore plus préférentiellement de 46 à 50 heures, et de façon encore plus préférentielle 48 heures, au cours de laquelle la température des biotites et de l'eau est progressivement élevée jusqu'à une température allant de 18 à 25°C, de préférence de 19 à 23°C, et encore plus préférentiellement 20°C, sous une pression d'environ 1 mbar.

Préférentiellement, l'élévation progressive de la température comporte les paliers suivants, se succédant dans cet ordre :
- 6 heures à -40°C,
- 10 heures à -30°C,
- 10 heures à -20°C,
- 10 heures à -10°C,
- 12 heures à +20°C.

Avantageusement, le procédé comprend une étape postérieure à l'étape de décongélation, au cours de laquelle la température des biotites et de la solution aqueuse est progressivement élevée jusqu'à une température d'environ 30°C, sous une pression d'environ 0,001 mbar, ladite étape durant de 25 à 65 heures, préférentiellement de 35 à 55 heures, et encore plus préférentiellement 46 heures.

Le procédé d'extraction d'un minéral comporte en outre une étape de libération des minéraux contenus dans les biotites, en particulier dans les clivages des biotites, de préférence par soumission des biotites à des vibrations suffisamment importantes pour libérer les minéraux. De façon avantageuse, la libération des minéraux comporte une étape de soumission à des ultrasons.

L'invention a également pour objet un procédé de caractérisation d'une paléoaltération selon la revendication 11. Cette méthode de caractérisation d'une paléoaltération présente l'avantage d'être précise et fiable car basée sur de la géochimie fine, isotopique. De plus, elle permet de caractériser les fluides responsables de l'altération. Par ailleurs, l'étude est effectuée sur des cristaux manipulables aisément puisqu'elle est réalisée sur toute phase minérale de faible taille, incluse dans les feuillets de biotite.

On extrait le minéral contenu dans les clivages de biotites au moyen du procédé d'extraction décrit ci-avant.

De préférence, la caractérisation consiste en une datation du minéral extrait au moyen d'une analyse ³⁹Ar-⁴⁰Ar.

Nous allons maintenant présenter un mode de réalisation de l'invention donné à titre d'exemple non limitatif.

Le procédé d'extraction a été mis en œuvre sur des échantillons de granites altérés prélevés dans le Massif Central, dans les Pyrénées et en Bretagne. Une ou plusieurs lame(s) mince(s) confectionnée(s) à partir de chaque échantillon ont été étudiées au microscope optique polarisant afin de déterminer la présence de biotites ± chloritisées contenant des cristaux le long de leurs clivages. Les échantillons comprenant des feldspaths potassiques au sein des biotites chloritisées ont ensuite été soumis au protocole suivant.

### Préparation de la roche brute

Lorsque cela se révélait nécessaire, la roche brute a été écorchée, c'est-à-dire que les parties externes altérées de la roche ont été enlevées à l'aide d'une scie à disque diamant, sous eau. Une roche la plus propre possible a ainsi été obtenue.

La roche ainsi écorchée a ensuite été découpée en plusieurs morceaux de 10 cm x 10 cm à l'aide de la scie à disque diamant, sous eau, pour faciliter le passage dans le concasseur. Les morceaux ont ensuite été séchés dans une étuve à 38°C durant 12 heures.

La roche découpée a ensuite été concassée dans un concasseur à mâchoires.

Les échantillons concassés ont ensuite été soumis à un tamisage à sec sur un tamis en inox permettant le passage des fragments de taille inférieure à 500 µm.

### Lavage de l'échantillon tamisé

Les fragments de taille inférieure à 500 µm, issus du concassage, ont ensuite été lavés sur un tamis en inox permettant d'éliminer les fragments de taille inférieure à 63 µm, en particulier les fines générées par le concassage et les minéraux de taille inférieure à 63 µm.

Une fraction comprenant les fragments de taille supérieure ou égale à 63 µm et inférieure à 500 µm a ainsi été obtenue. Cette fraction a ensuite été rincée plusieurs fois à l'eau déminéralisée, à l'aide d'une pissette, dans le même tamis en inox, pour avoir l'échantillon le plus propre possible.

### Tri des biotites par séparation magnétique

Un aimant paramagnétique au Néodyme a été utilisé manuellement. Ceci a permis de récupérer les biotites de l'échantillon et de les déposer dans une boîte de Pétri en passant un doigt ganté sur l'aimant pour les décrocher. Cette méthode de séparation magnétique est assez rapide et efficace.

### Dernières étapes de préparation des biotites

Les biotites obtenues par séparation magnétique ont été placées dans un flacon plastique à vis, dans 4 à 5 centimètres d'eau déminéralisée. Le flacon a ensuite été inséré dans une cuve à ultrasons remplie d'eau, qui a été maintenue en fonctionnement pendant 1h. Cette manipulation a permis de décrocher les minéraux pouvant être accolés aux biotites.

Le surplus d'eau dans le flacon a ensuite été éliminé et les biotites ont été récupérées en les décollant à l'aide d'eau déminéralisée administrée par l'intermédiaire d'une pissette.

### Extraction des minéraux contenus dans les clivages de biotites

Le protocole d'extraction de minéral selon l'invention a ensuite été mis en œuvre.

Dans cet exemple de mise en œuvre de l'invention, les biotites ont été introduites dans un bécher en Pyrex d'une contenance de 100 mL, contenant 1 à 2 centimètres d'eau déminéralisée et recouvert d'un couvercle non étanche type verre de montre, posé dessus.

Ce bécher a ensuite été placé dans un congélateur à une température de -32°C durant 12 heures, de façon que l'eau du bécher soit congelée.

Le bécher contenant les biotites a ensuite été retiré du congélateur et placé au sein d'un lyophilisateur de marque Christ avec plateau chauffant, préalablement programmé en phase de congélation à -40°C pour garder le bécher congelé. La lyophilisation a été effectuée dans des conditions décrites ci-après de température et de pression, permettant de sublimer l'eau :
Le bécher contenant les biotites a été placé pendant une durée de 88 heures dans le lyophilisateur. Les inventeurs ont créé un programme spécifique de lyophilisation.

La première étape du programme, appelée dessiccation primaire, a duré 48 heures, pendant lesquelles il y a eu un réchauffement progressif du plateau de -40°C à +20°C, sous une pression de 1 mbar. Plus précisément, les biotites ont été placées :
- 6 heures à -40°C, puis
- 10 heures à -30°C, puis
- 10 heures à -20°C, puis
- 10 heures à -10°C, puis
- 12 heures à +20°C.

Le procédé d'extraction de minéral contenu dans les clivages de biotites comprend donc une étape de congélation des biotites, suivie d'une étape de décongélation des biotites. Dans ce procédé, les biotites ont été mises en contact avec de l'eau, préalablement aux étapes de congélation et décongélation, et ont été maintenues en contact avec l'eau pendant l'étape de congélation et une partie de l'étape de décongélation.

De façon surprenante, les feuillets constituant les biotites ont ainsi été ouverts.

### Récupération des minéraux contenus dans les clivages de biotites

La deuxième étape du programme, appelée dessiccation secondaire, a duré 46 heures pendant lesquelles le plateau s'est réchauffé progressivement jusqu'à +30°C sous une pression de 0,001 mbar. Plus précisément, les biotites ont été placées 11 heures à +20°C, puis 35 heures à +30°C.

Après rupture du vide, le matériel lyophilisé a été à nouveau soumis aux ultrasons dans de l'eau déminéralisée, dans les conditions précédemment décrites, afin de libérer les minéraux (feldspaths potassiques et autres minéraux) des feuillets de biotites, par vibrations.

Le matériel lyophilisé a ensuite été lavé et tamisé sous eau déminéralisée, à l'aide d'une pissette, dans un tamis en inox permettant d'éliminer les éléments de taille inférieure à 25 µm, comme par exemple des argiles, qui étaient contenus dans les biotites et ont été libérés lors de la lyophilisation.

Le matériel lyophilisé a ensuite été mis dans une boite de Pétri, et a été séché dans une étuve à 38°C pendant 24 heures.

Des cristaux de feldspath potassique ont ensuite été récupérés par « piquetage » sous binoculaire à l'aide d'une fine aiguille en acier avec manche, puis déposés dans un mini-tube plastique de 2 mL avec fond en entonnoir. Une goutte d'eau déminéralisée avait été placée préalablement au fond du mini-tube pour faciliter le décrochement des cristaux de l'aiguille en acier. Le tube a ensuite été séché dans une étuve classique à 38°C durant une période permettant un séchage complet (quelques heures).

Les cristaux de feldspath potassique ainsi extraits sont destinés à être étudiés afin de caractériser la paléoaltération de la roche hôte. La caractérisation peut consister en une datation par analyse ³⁹Ar-⁴⁰Ar.

L'invention n'est pas limitée aux modes de réalisation présentés et d'autres modes de réalisation apparaîtront clairement à l'homme du métier. Il est notamment possible de mettre en œuvre le procédé d'extraction sur des roches prélevées dans d'autres massifs. Le procédé peut être appliqué à tout type de roche comprenant des biotites chloritisées. Les étapes de préparation de la roche brute et de lavage de l'échantillon, peuvent être réalisées par toute technique connue de l'homme du métier, pour obtenir une fraction de fragments de taille inférieure ou égale à 1000 µm et supérieure ou égale à 50 µm, de préférence entre 60 µm et 500 µm, présentant le degré de propreté qu'il jugera nécessaire pour la mise en œuvre des étapes suivantes du procédé. De même, la séparation des biotites peut être effectuée par toute technique connue de l'homme du métier. Enfin, le décrochage des minéraux encore accolés aux biotites peut être effectué par toute technique connue du domaine. L'objet de ces différentes étapes de préparation est d'obtenir des biotites non « contaminées » par des impuretés ou des minéraux non visés par le protocole d'extraction.

Pour ce qui est de la mise en œuvre du protocole selon l'invention, les contenants, congélateurs et lyophilisateurs sont uniquement donnés à titre d'illustration. Tout matériel permettant de placer les biotites dans les conditions de température et pression, aux temps indiqués, pourra être utilisé.

Après ouverture des feuillets de biotite, la libération des minéraux contenus dans les feuillets de biotite peut être effectuée par toute technique apte à soumettre les biotites à des vibrations suffisamment importantes pour libérer les minéraux. "Contenus dans les feuillets de biotite" signifie "contenu dans les clivages des biotites".

## Revendications

1. Procédé d'extraction d'un minéral contenu dans des biotites, **caractérisé en ce que** le procédé comprend une étape de congélation des biotites, suivie d'une étape de décongélation des biotites, dans lequel,
- les biotites sont mises en contact avec de l'eau préalablement aux étapes de congélation et décongélation, et sont maintenues en contact avec l'eau pendant l'étape de congélation et au moins une partie de l'étape de décongélation,
- l'étape de décongélation a lieu dans un lyophilisateur,
- la décongélation des biotites et au moins une partie de l'étape de congélation a lieu à environ 1 mbar,
procédé comportant en outre une étape de libération des minéraux contenus dans les biotites, en particulier dans les clivages des biotites.

2. Procédé d'extraction selon la revendication précédente, dans lequel on utilise des biotites dans lesquelles le minéral est contenu dans les clivages des biotites.

3. Procédé d'extraction d'un minéral selon l'une quelconque des revendications précédentes, dans lequel le minéral est choisi parmi les minéraux suivants : feldspath potassique, quartz, plagioclase, et prehnite.

4. Procédé d'extraction d'un minéral selon l'une quelconque des revendications précédentes, dans lequel l'eau est de l'eau déminéralisée.

5. Procédé d'extraction d'un minéral selon l'une quelconque des revendications précédentes, dans lequel l'étape de congélation est effectuée à une température allant jusqu'à -40°C.

6. Procédé d'extraction d'un minéral selon l'une quelconque des revendications précédentes, dans lequel l'étape de décongélation dure de 36 à 76 heures, de préférence de 41 à 66 heures, encore plus préférentiellement de 46 à 50 heures, et de façon encore plus préférentielle 48 heures, au cours de laquelle la température des biotites et de l'eau est progressivement élevée jusqu'à une température allant de 18 à 25°C, de préférence de 19 à 23°C, et encore plus préférentiellement 20°C.

7. Procédé d'extraction d'un minéral selon la revendication précédente, dans lequel l'élévation progressive de la température comporte les paliers suivants, se succédant dans cet ordre :
- 6 heures à -40°C,
- 10 heures à -30°C,
- 10 heures à -20°C,
- 10 heures à -10°C,
- 12 heures à +20°C.

8. Procédé d'extraction d'un minéral selon la revendication précédente, comprenant une étape postérieure à l'étape de décongélation, au cours de laquelle la température des biotites et de l'eau est progressivement élevée jusqu'à une température d'environ 30°C, sous une pression d'environ 0,001 mbar, ladite étape durant de 25 à 65 heures, préférentiellement de 35 à 55 heures, et encore plus préférentiellement 46 heures.

9. Procédé d'extraction d'un minéral selon l'une quelconque des revendications précédentes, dans lequel la décongélation des biotites est une lyophilisation.

10. Procédé d'extraction d'un minéral selon l'une quelconque des revendications précédentes, dans lequel les minéraux sont libérés par soumission des biotites à des vibrations suffisamment importantes pour libérer les minéraux.

11. Procédé de caractérisation d'une paléoaltération, **caractérisé en ce qu'**on étudie au moins un minéral contenu dans des clivages de biotites extraites d'une roche felsique au moins en partie altérée, procédé dans lequel on extrait le minéral contenu dans les clivages de biotites au moyen du procédé d'extraction selon l'une quelconque des revendications 1 à 10, et on réalise la caractérisation de la paléoaltération en étudiant le minéral extrait.

12. Procédé de caractérisation selon la revendication précédente, dans lequel la caractérisation consiste en une datation du minéral extrait au moyen d'une analyse ³⁹Ar-⁴⁰Ar.

## Patentansprüche

1. Verfahren zur Extraktion eines in Biotiten enthaltenen Minerals, **dadurch gekennzeichnet, dass** das Verfahren einen Schritt des Gefrierens der Biotite, gefolgt von einem Schritt des Auftauens der Biotite umfasst, wobei
- die Biotite vor den Schritten des Gefrierens und Auftauens mit Wasser in Kontakt gebracht werden und während des Schritts des Gefrierens und zumindest eines Teils des Schritts des Auftauens mit dem Wasser in Kontakt gehalten werden,
- der Schritt des Auftauens in einem Gefriertrockner stattfindet,
- das Auftauen der Biotite und zumindest ein Teil des Schritts des Gefrierens bei etwa 1 mbar stattfindet,
und das Verfahren weiterhin einen Schritt der Freisetzung von Mineralien umfasst, die in den Biotiten enthalten sind, insbesondere in den Spaltungen der Biotite.

2. Verfahren zur Extraktion nach dem vorangehenden Anspruch, wobei Biotite verwendet werden, in denen das Mineral in den Spaltungen der Biotite enthalten ist.

3. Verfahren zur Extraktion eines Minerals nach einem der vorangehenden Ansprüche, wobei das Mineral aus den folgenden Mineralien ausgewählt wird: Kaliumfeldspat, Quarz, Plagioklas und Prehnit.

4. Verfahren zur Extraktion eines Minerals nach einem der vorangehenden Ansprüche, wobei das Wasser entmineralisiertes Wasser ist.

5. Verfahren zur Extraktion eines Minerals nach einem der vorangehenden Ansprüche, wobei der Schritt des Gefrierens bei einer Temperatur von bis zu -40°C durchgeführt wird.

6. Verfahren zur Extraktion eines Minerals nach einem der vorangehenden Ansprüche, wobei der Schritt des Auftauens 36 bis 76 Stunden, vorzugsweise 41 bis 66 Stunden, bevorzugter 46 bis 50 Stunden und noch bevorzugter 48 Stunden dauert, währenddessen die Temperatur der Biotite und des Wassers allmählich auf eine Temperatur von 18 bis 25°C, vorzugsweise 19 bis 23°C und bevorzugter 20°C erhöht wird.

7. Verfahren zur Extraktion eines Minerals nach dem vorangehenden Anspruch, wobei die schrittweise Erhöhung der Temperatur die folgenden, in dieser Reihenfolge aufeinanderfolgenden Phasen umfasst:
- 6 Stunden bei -40°C,
- 10 Stunden bei -30°C,
- 10 Stunden bei -20°C,
- 10 Stunden bei -10°C,
- 12 Stunden bei +20°C.

8. Verfahren zur Extraktion eines Minerals nach dem vorangehenden Anspruch, umfassend einen Schritt nach dem Schritt des Auftauens, bei dem die Temperatur der Biotite und des Wassers unter einem Druck von etwa 0,001 mbar allmählich auf eine Temperatur von etwa 30°C erhöht wird, wobei dieser Schritt 25 bis 65 Stunden, bevorzugt 35 bis 55 Stunden und bevorzugter 46 Stunden dauert.

9. Verfahren zur Extraktion eines Minerals nach einem der vorangehenden Ansprüche, wobei das Auftauen der Biotite eine Gefriertrocknung ist.

10. Verfahren zur Extraktion eines Minerals nach einem der vorangehenden Ansprüche, wobei die Minerale freigesetzt werden, indem die Biotite Vibrationen ausgesetzt werden, die groß genug sind, um die Minerale freizusetzen.

11. Verfahren zur Charakterisierung einer Paläoalteration, **dadurch gekennzeichnet, dass** man mindestens ein Mineral untersucht, das in Spaltungen von Biotiten enthalten ist, die aus einem zumindest teilweise verwitterten felsigen Gestein extrahiert wurden, wobei in dem Verfahren das in den Spaltungen von Biotiten enthaltene Mineral mittels des Extraktionsverfahrens nach einem der Ansprüche 1 bis 10 extrahiert wird, und die Charakterisierung der Paläoalteration durch Untersuchung des extrahierten Minerals durchgeführt wird.

12. Verfahren zur Charakterisierung nach dem vorangehenden Anspruch, wobei die Charakterisierung in einer Datierung des extrahierten Minerals mittels einer ³⁹Ar - ⁴⁰Ar-Analyse besteht.

## Claims

1. Method of extracting a mineral contained in biotite, **characterized in that** the method comprises a step of freezing the biotite, followed by a step of thawing the biotite, in which,
- the biotite is brought into contact with water prior to the freezing and thawing steps, and are kept in contact with water during the freezing step and at least part of the thawing step,
- the thawing step takes place in a freeze dryer,
- the thawing of biotite and at least part of the freezing step takes place at about 1 mbar, the method further comprising a step of releasing the minerals contained in the biotite, especially in the cleavages of the biotite.

2. Method of extracting according to the preceding claim, wherein biotite is used in which the mineral is contained in the cleavages of the biotite.

3. Method of extracting a mineral according to any one of the preceding claims, whereby the mineral is selected from the following minerals: potassium feldspar, quartz, plagioclase, and prehnite.

4. Method of extracting a mineral according to any one of the preceding claims, wherein water is demineralized water.

5. Method of extracting a mineral according to any one of the preceding claims, wherein the freezing step is carried out at a temperature of up to -40 ° C.

6. Method of extracting a mineral according to any one of the preceding claims, wherein the thawing step lasts from 36 to 76 hours, preferably from 41 to 66 hours, even more preferably from 46 to 50 hours, and even more preferably 48 hours, during which the temperatures of the biotite and of the water are gradually raised to a temperature ranging from 18 to 25 ° C, preferably from 19 to 23 ° C, and even more preferably 20 ° C.

7. Method of extracting a mineral according to the preceding claim, wherein the gradual rise in temperature comprises the following stages, following one another in this order:
- 6 hours at -40 ° C,
- 10 hours at -30 ° C,
- 10 hours at -20 ° C,
- 10 hours at -10 ° C,
- 12 hours at + 20 ° C.

8. Method of extracting a mineral according to the preceding claim, comprising a step subsequent to the thawing step, during which the temperature of the biotite and the water are gradually raised to a temperature of about 30 ° C, under a pressure of about 0.001 mbar, said step lasting from 25 to 65 hours, preferably from 35 to 55 hours, and even more preferably 46 hours.

9. Method of extracting a mineral according to any one of the preceding claims, wherein the thawing of the biotite is a lyophilization.

10. Method of extracting a mineral according to any one of the preceding claims, wherein the minerals are released by subjecting the biotite to vibrations sufficiently large to release the minerals.

11. Method for characterizing of a paleoalteration, **characterized in that** at least one mineral is studied that is contained in cleavages of biotites extracted from an at least partially altered felsic rock, in which method the mineral contained in cleavages of biotite is extracted using the extraction method according to any one of claims 1 to 10, and the characterization of the paleoalteration is carried out by studying the extracted mineral.

12. Method for characterizing according to the preceding claim, wherein the characterization consists of dating the mineral extracted by means of a ³⁹Ar-⁴⁰Ar analysis.
